Europäisches Patentamt

European Patent Office

Office européen des brevets

(19)

(11) Publication number: **0 245 111 B1**

(12) **EUROPEAN PATENT SPECIFICATION**

(45) Date of publication of patent specification :
20.03.91 Bulletin 91/12

(51) Int. Cl.⁵ : **F16F 13/00, F16F 3/08,
F16F 9/30**

(21) Application number : 87304114.9

(22) Date of filing : 08.05.87

(54) A bellow type shock absorber.

(30) Priority : 09.05.86 JP 106032/86

(43) Date of publication of application :
11.11.87 Bulletin 87/46

(45) Publication of the grant of the patent :
20.03.91 Bulletin 91/12

(84) Designated Contracting States :
DE FR GB IT

(56) References cited :
EP-A- 0 105 794
FR-A- 1 260 067
GB-A- 895 798
US-A- 4 005 858

(56) References cited :
IBM TECHNICAL DISCLOSURE BULLETIN,
vol. 21, no. 5, October 1978, New York, US; J.M.
RITTER: "Variable damping supporter"
PATENT ABSTRACTS OF JAPAN, vol.4, no. 64
(M-11)[546], 14th May 1980; & JP-A-5530563
(BRIDGESTONE TIRE K.K.) 04-03-1980

(73) Proprietor : SUZUKI SOGYO KABUSHIKI
KAISHA
789, Miyakami
Shimizushi Shizuokaken (JP)

(72) Inventor : Nakanishi, Motoyasu
1461-47 Tenma
Fujishi Shizuokaken (JP)

(74) Representative : Boyes, Kenneth Aubrey et al
Frank B. Dehn & Co. Imperial House 15-19
Kingsway
London WC2B 6UZ (GB)

EP 0 245 111 B1

EP 0 245 111 B1

## Description

### Background of the Invention

The present invention relates to bellows type shock absorbers.

This type of shock absorber is adapted to absorb vibration by virtue of the spring characteristics of the bellows, which is made of a resilient material and interpositioned between the source of vibration or shock and the item requiring shock absorbing protection. Such a shock absorber may be employed in various types of shock absorbing equipment since its resonance point can be varied as required, by varying the number of crests, diameter and wall thickness of the bellows.

The preferred performance characteristics generally required for these shock absorbers is that the resonance frequency should be low and the magnification ratio of resonance should be small.

Conventional rubber-based shock absorbers of various types suffer from the disadvantage that their resonance frequency is high. For spring type and air-cushion type shock absorbers, the resonance frequency can be shifted to the lower frequency zone but it is however difficult to reduce the magnification of resonance of these shock absorbers since repercussive resilience acts on application of vibration. This is the same with bellows type shock absorbers which have a theoretically similar construction to spring type shock absorbers.

The reduction of the magnification of resonance at the resonance point is the greatest problem for the bellows type shock absorber.

In IBM Technical disclosure Bulletin Vol. 21, N°. 5, P1765 a variable damping supporter is disclosed comprising a gas-filled case having both a needle valve and a one-way valve. An optional spring stiffener may be included to handle larger loads. GB 895798 discloses a spring shock absorber unit for vehicle supsensions comprising two rubber casings each enclosing a helical metal spring, which are interconnected by an annular rigid flange. A metal member seals the bottom of the lower rubber casing and a telescopic shock absorber is connected between the flange and the metal member.

### Summary of the Invention

According to one aspect of the invention there is provided a bellows type shock absorber comprising a bellows body both end openings of which are sealed with cover members, a through hole providing communication between the inside and the outside of said bellows, and a shock absorbing column disposed inside said bellows body aligned along the axis of said bellows body and coupled with said bellows body through said cover members at both ends of said bellows body so that said shock absorbing column physically varies in response to compression and extension of said bellows body, characterised by said shock absorbing column being made of a gelled type material having a penetration value of approximately 50 to 200.

It is a feature of such a bellows type shock absorber that by providing such a shock absorbing column the magnification of resonance at the resonance point is reduced. If a pressure in the axial direction is applied to the bellows, the bellows is compressed accordingly and fluid is discharged from the through hole as a result of the increase of pressure in the internal chamber of the bellows. Simultaneously the shock absorbing column made of gelled material is expanded in the direction at right angles to the axis of the bellows while its length in its axial line is reduced. Shock absorbing motion of this shock absorbing column provides an extremely small repercussive resilience because it is made of gelled material.

Preferably, said through hole comprises a flow control valve. Said flow control valve may for example be a needle valve which controls the flow rate of fluid from the bellows. It is a feature of this embodiment that since said through hole is adapted to serve as a flow control means the compression and extension characteristics of the bellows may be varied in accordance with the discharged volume of fluid and thus the resonance frequency may be varied in accordance with the variation of load applied to the main bellows.

According to another aspect of the invention there is provided a bellows type shock absorber comprising a main bellows body both end openings of which are sealed with cover members, and a shock absorbing column disposed inside said main bellows body aligned along the axis of said main bellows body and coupled with said main bellows body through said cover members at both ends of said main bellows body so that said shock absorbing column physically varies in response to compression and extension of said main bellows body, characterised by said shock absorbing column being made of a gelled type material having a penetration value of approximately 50 to 200, and by a sealed sub-bellows and a through hole coupled to a tubular member which provides communication between the internal chambers of both said main bellows body and said sealed sub-bellows, wherein the spring constant of said sealed sub-bellows is different from that of said main bellows.

It is a feature of such a sealed bellows type shock absorber that it can be used even under adverse environmental conditions. The fluid in the main bellows flows into the sub-bellows when the main bellows is compressed

2

thus raising the internal pressure of the sub-bellows. Accordingly, the sub-bellows is extended owing to this motion. The repercussion of the sub-bellows thus produced acts on the main bellows as the resistance against compression of said bellows. Therefore, the natural resonance frequency and the magnification of resonance of the main bellows are varied by the repercussion of the sub-bellows.

Preferably said main bellows body and said sub-bellows are filled with a fluid such as air or oil.

Specific embodiments will now be described, by way of example only, with reference to the accompanying drawings wherein :

Figure 1 is a vertical cross-sectional view of a shock absorber in accordance with the present invention,

Figure 2 is a plan view of the shock absorber as shown in Figure 1,

Figure 3 is a vertical cross-sectional view showing another embodiment of a shock absorber according to the present invention,

Figure 4 is a vertical cross-sectional view showing another embodiment of a shock absorber in accordance with the present invention, and

Figure 5 is a graph illustrating the vibration transmitting characteristics of the shock absorber of the present invention.

Detailed Description of the Invention

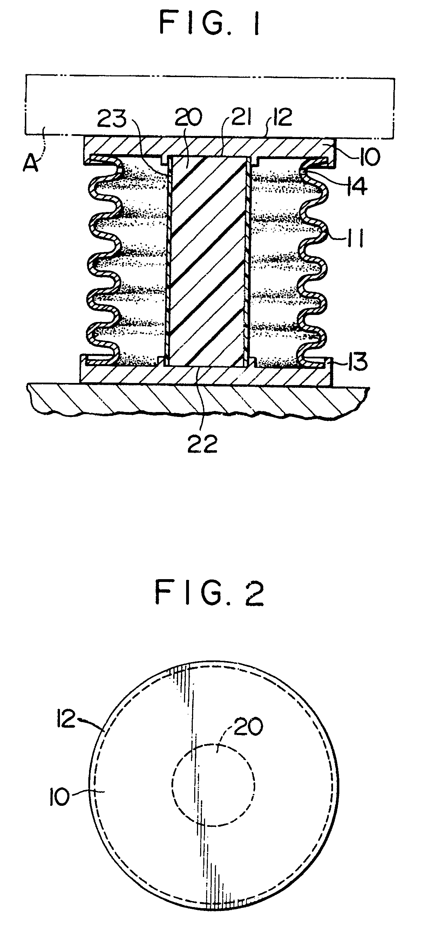

In the embodiment shown in Figures 1 and 2, bellows 10 comprises bellows body 11 and covers 12 and 13. Bellows body 11 is sealed with the covers 12 and 13 provided at the upper and lower ends of the bellows body 11. A shock absorbing column 20 made of gelled material is provided inside bellows body 11 coaxially of the bellows body. Upper and lower ends 21 and 22 of this shock absorbing column 20 are connected to the internal center surfaces of said covers 12 and 13.

Said shock absorbing column 20 is made of a gelled material with a penetration value of approximately 50 to 200 such as, for example, silicone ; Toray Silicone CY52 (manufactured by Toray Silicone Kabushiki Kaisha) is suited as such silicone.

The penetration value herein shown is measured in accordance with Japanese Industrial Standard K 2530-1976 - (50 g load).

This standard relates to the petroleum asphalt penetration testing method wherein samples with a penetration value of 350 or less are tested with a load of 100 g and gelled materials are tested with a load of 50 g. According to this standard the gelled material is held at 25°C and a penetrometer in accordance with Japanese Industrial Standard R 2808 is used to measure the depth to which a needle with a total load of 50 g penetrates in 5 seconds. The penetration value quoted is the depth in tenths of a millimeter to which the needle penetrates.

If silicone is used as the material, the weight and thus the cost of the silicone needed can be reduced by mixing into the silicone fine hollow spherical particles such as fine particles of 5 to 300 microns in diameter, referred to as micro-spheres, micro-balloons, hollow bubbles or synthetic foam.

A compound type silicone gel material mixed with fine hollow particles as referred to above is described in detail in the Specification of U.S. Patent N° 4,861,804.

In addition, the external surface of said shock absorbing column 20 is preferrably covered with an external layer 23 made of flexible elastic material such as for example, silicone rubber. In the case of a shock absorbing column 20 made of silicone, the external surface of shock absorbing column 20 can be thus protected.

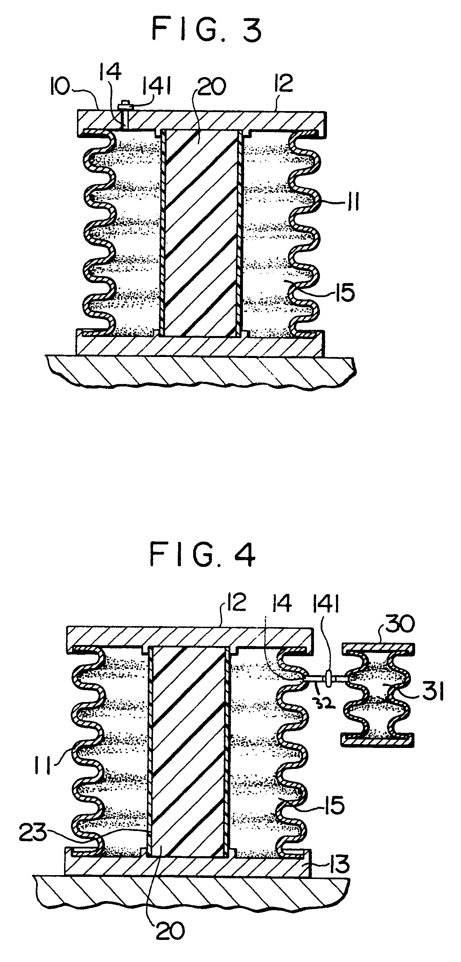

Said bellows 10 is provided with through hole 14 in the outer wall of bellows body 11 or in said covers 12 (as shown in Figure 3) and/or 13, through which the internal chamber of bellows 10 may communicate with the outside.

The bellows body 11 of said bellows 10 is generally made of resilient metallic material such as phosphor bronze or beryllium copper but, depending on the case, synthetic resin material having elasticity can be used. In either case, a composite type bellows construction which is made up by concentrically arranging another bellows having a larger diameter than that of bellows body 11 outside said bellows body 11 can be used.

In the above embodiment, if lower cover 13 of said bellows 10 is arranged to contact the vibration source and the object A which requires shock absorbing is mounted on the other cover 12, vibration waves are absorbed by bellows body 11 and shock absorbing column 20 and the vibrational motion of the objection A is damped.

Vibrational waves applied to bellows 10 are absorbed by elastic deformation of bellows body 11 as well as by non-elastic deformation of shock absorbing column 20 made of gelled material and therefore the repercussive elasticity of bellows body 11 is suppressed by deformation of this shock absorbing column 20. Furthermore, said bellows 10 is provided with through hole 14 through which the internal chamber 15 communicates with the outside and, when the bellows 10 is compressed internal air is discharged from through hole 14 due to an increase of pressure in the internal chamber 15 and, when bellows 10 is extended, external air flows into the internal chamber due to a decrease of pressure in the internal chamber 15.

EP 0 245 111 B1

Accordingly, compression and extension of bellows 10 is affected by the air flow rate determined in accordance with the diameter of through hole 14 and, if the diameter is small, the air discharging resistance at the time of compression of bellows 10 or the air suction resistance at the time of extension is significant in relation to the action of bellows 10, this having a particular effect upon resonance frequency.

The results of experiments on the shock absorber shown in this embodiment are described below.

The bellows used had a diameter of 50.5 mm between crests, a height of 70 mm, five crests along its overall height, a through hole with diameter of 2 mm and was made of beryllium copper of 0.2 mm in thickness.

A conventional type bellows which did not internally contain the shock absorbing column was used in the first test whereas a shock absorbing column with a 30 mm diameter made of silicone having a penetration value of 150 was provided inside the bellows in the second test.

Fine hollow particles sold by Japan Fillits Kabushiki Kaisha under the trademark FILLITE were mixed with the silicone to constitute as much as 35 percent by weight in this shock absorbing column.

In the third test, bellows having the shock absorbing column which was used in the second test were stacked in two layers, one on top of another.

In all of the above tests, the bellows was placed on the vibratory plate of a vibration producing unit which provided an acceleration of 0.15G (G = 9.81 ms$^{-2}$) and the vibrational acceleration G′ transmitted to an object set on the top surface of the bellows was divided by vibrational acceleration G of the vibratory plate and measured in terms of G′/G.

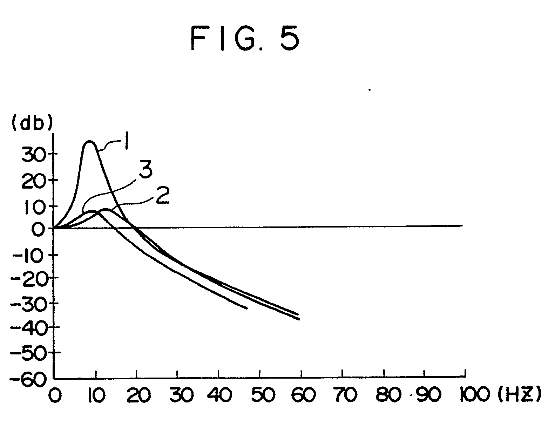

In the graph shown in Figure 5, the 0 (zero) db line shows the level at which transmissibility T is "1", the transmissibility level being calculated with the formula given below.

Transmissibility T(db) = 20 log (G′/G)

The following describes the results of the above tests referring to Figure 5 and Table 1. In Figure 5, reference numbers 1, 2 and 3 indicate the test number.

Table 1

| Test No. | Resonance Point (Hz) | Magnification of Resonance (X) | Load (kg) |
|---|---|---|---|
| 1 | 8 | 16  18 | 16 |
| 2 | 13 | 2.24 | 16 |
| 3 | 9 | 2.1 | 9 |

In the third test only, the load was set to 9 kg.

As shown by the above, it was confirmed that the magnification of resonance of a shock absorber constructed in accordance with the present invention is extremely small as compared with a conventional bellows type shock absorber.

Said resonance frequency, as described above, can be adjusted by controlling the flow rate of air via through hole 14, or needle valve 141 which serves as through hole 14 as shown in Figure 3. Adjusting the flow rate of air is advantageous since transmissibility T can be reduced in accordance with the weight of object A.

Said shock absorbing column 20 can be combined with bellows 10 so that it is physically deformed by expansion and contraction of bellows body 11 by using another coupling means between the upper and lower ends of shock absorbing column 20 and the upper and lower internal surfaces of the bellows 10 or the internal surfaces of covers 12 and 13.

In any of the above embodiments, since the shock absorber is adapted so that internal chamber 15 of bellows 10 is in direct communication with the outside, the resonance frequency of bellows 10 depends on the flow rate of air at through hole 14.

A shock absorber in accordance with the present invention, may be used in an environment of water or pollutive particles where it is undesirable to allow such external fluid into the bellows 10.

The second embodiment provides a shock absorber which is convenient in an application as described above and characterized in that through hole 14 provides communication with internal chamber 31 of a sub-bellows 30 as shown in Figure 4.

In this embodiment, sub-bellows 30 communicates with through hole 14 through tubular member 32 in which is provided a flow control valve 141.

Said sub-bellows 30 is made to provide a spring constant different from that of main bellows 10 by varying its capacity, material, plate thickness, diameter, number of crests, etc. Depending on the case, sub-bellows 30 may contain a shock absorbing column made of gelled material as in the main bellows 10.

4

Though said main bellows 10 and sub-bellows 30 can be filled with a gas, bellows in this type of shock absorber are generally filled with a fluid having a small expansion coefficient such as, for example, silicone oil or the like.

Accordingly, in the case of the shock absorber of the second embodiment, the spring constant of said sub-bellows 30 and the flow rate of said through hole 14 act to change the resonance frequency of main bellows 10 and the range of adjustment of the resonance frequency, which is also dependent upon the load, can therefore be vastly expanded.

The shock absorber according to the third embodiment is constructed with a flow control means such as needle valve 141 provided in through hole 14, and as described in the above embodiments the resonance frequency can be changed in response to the load of object A.

## Claims

1. A bellows type shock absorber comprising a bellows body (11) both end openings of which are sealed with cover members (12, 13), a through hole (14) providing communication between the inside and the outside of said bellows, and a shock absorbing column (20) disposed inside said bellows body (11) aligned along the axis of said bellows body (11) and coupled with said bellows body (11) through said cover members (12, 13) at both ends of said bellows body (11) so that said shock absorbing column (20) physically varies in response to compression and extension of said bellows body (11), characterised by said shock absorbing column (20) being made of a gelled type material having a penetration value of approximately 50 to 200 according to Japanese Industrial Standard K 2530-1976 as herein before defined.

2. A bellows type shock absorber comprising a mains bellows body (11) both end openings of which are sealed with cover members (12, 13), and a shock absorbing column (20) disposed inside said main bellows body (11) aligned along the axis of said main bellows body (11) and coupled with said main bellows body (11) through said cover members (12, 13) at both ends of said main bellows body (11) so that said shock absorbing column (20) physically varies in response to compression and extension of said main bellows body (11), characterised by said shock absorbing column (20) being made of a gelled type material having a penetration value of approximately 50 to 200, and by a sealed sub bellows (30) and a through hole (14) coupled to a tubular member (32) which provides communication between the internal chambers (15, 31) of both said main bellows body (11) and said sealed sub-bellows (30), wherein the spring constant of said sealed sub-bellows (30) is different from that of said main bellows (11).

3. A bellows type shock absorber as claimed in claim 2 wherein said main bellows body (11) and said sealed sub-bellows (30) are filled with a fluid.

4. A bellows type shock absorber as claimed in claim 3, wherein said fluid is air.

5. A bellows type shock absorber as claimed in claim 3, wherein said fluid is silicone oil.

6. A bellows type shock absorber as claimed in any of claims 2 to 5, wherein a shock absorbing column made of a gelled type material is provided inside said sealed sub-bellows (30).

7. A bellows type shock absorber as claimed in any preceding claim wherein the gelled type material contains fine hollow particles.

8. A bellows type shock absorber as claimed in any preceding claim wherein said through hole (14) comprises a flow control valve (141).

9. A bellows type shock absorber as claimed in any preceding claim wherein the external surface of the or each shock absorbing column is covered with an elastic material.

10. A bellows type shock absorber as claimed in any preceding claim wherein the or each shock absorbing column is made of silicone.

11. A bellows type shock absorber as claimed in any preceding claim, wherein said through hole (14) is provided on one of said cover members.

## Ansprüche

1. Balgförmiger Stoßdämpfer mit einem Balgkörper (11), dessen beide Enden mit Abdeckelementen (12, 13) abgedichtet sind, einem eine Verbindung zwischen dem Inneren und dem Äußeren des Balgs herstellenden Durchgangslochs (14) und mit einer Stoßdämpfersäule (20), die innerhalb des Balgkörpers (11) angeordnet ist, zur Achse des Balgkörpers (11) ausgerichtet ist, und mit dem Balgkörper (11) über die Abdeckelemente (12, 13) an den beiden Enden des Balgkörpers (11) gekoppelt ist, so daß die Stoßdämpfersäule (20) sich körperlich in Abhängigkeit von der Kompression und der Dehnung des Balgkörpers (11) ändert, dadurch gekenn-

**zeichnet,** daß die Stoßdämpfersäule (20) aus einem gelartigen Material mit einem Haftwert von etwa 50 bis 200 gemäß der vorstehend definierten japanischen Industrienorm K2530-1976 hergestellt ist.

2. Balgförmiger Stoßdämpfer mit einem Hauptbalgkörper (11), dessen beide Enden mit Abdeckelementen (12, 13) abgedichtet sind und mit einer Stoßdämpfersäule (20), die innerhalb des Hauptbalgkörpers (11) angeordnet ist, längs der Achse des Hauptbalgkörpers (11) ausgerichtet ist und mit dem Hauptbalgkörper (11) über die Abdeckelemente (12, 13) an den beiden Enden des Hauptbalgkörpers (11) gekoppelt ist, so daß sich die Stoßdämpfersäule (20) körperlich in Abhängigkeit von der Kompression und der Ausdehnung des Hauptbalgkörpers (11) ändert, **dadurch gekennzeichnet,** daß die Stoßdämpfersäule (20) aus einem gelförmigen Material mit einem Haftwert von etwa 50 bis 200 hergestellt ist, und daß ein abgedichteter Hilfsbalg (30) sowie ein Durchgangsloch (14) vorgesehen sind, die an ein rohrförmiges Element (32) angekoppelt sind, das eine Verbindung zwischen den Innenkammern (15, 31) des Hauptbalgkörpers (11) und des abgedichteten Hilfsbalgs (13) herstellt, wobei die Fehlerkonstante des abgedichteten Hilfsbalgs (30) sich von der des Hauptbalgs (11) unterscheidet.

3. Balgförmiger Stoßdämpfer nach Anspruch 2, bei dem der Hauptbalgkörper (11) und der abgedichtete Hilfsbalg (30) mit einem Strömungsmittel gefüllt sind.

4. Balgförmiger Stoßdämpfer nach Anspruch 3, bei dem das Strömungsmittel Luft ist.

5. Balgförmiger Stoßdämpfer nach Anspruch 3, bei dem das Strömungsmittel Silikonöl ist.

6. Balgförmiger Stoßdämpfer nach den Ansprüchen 2 bis 5, bei dem eine aus einem gelartigen Material hergestellte Stoßdämpfersäule innerhalb des abgedichteten Hilfsbalgs (30) vorgesehen ist.

7. Balgförmiger Stoßdämpfer nach den vorhergehenden Ansprüchen, bei dem das gelartige Material feine Hohlpartikel enthält.

8. Balgförmiger Stoßdämpfer nach den vorhergehenden Ansprüchen, bei dem das Durchgangsloch (14) durch ein Strömungsregelventil (141) gebildet ist.

9. Balgförmiger Stoßdämpfer nach den vorhergehenden Ansprüchen, bei dem die Oberfläche der Stoßdämpfersäule (n) mit einem elastischen Material überzogen ist.

10. Balgförmiger Stoßdämpfer nach den vorhergehenden Ansprüchen, bei dem die Stoßdämpfersäule (n) aus Silikon hergestellt ist.

11. Balgförmiger Stoßdämpfer nach den vorhergehenden Ansprüchen, bei dem das Durchgangsloch (14) in einem der Abdeckelemente vorgesehen ist.

## Revendications

1. Amortisseur du type à soufflet, comprenant un corps de soufflet (11) dont les deux ouvertures extrêmes sont fermées de façon étanche par des pièces formant couvercle (12, 13), un trou (14), assurant la communication entre l'intérieur et l'extérieur du soufflet, et une colonne d'amortissement (20) disposée à l'intérieur du corps de soufflet (11), en étant alignée suivant l'axe de ce corps de soufflet (11) et accouplée à ce corps de soufflet (11) par l'intermédiaire des pièces formant couvercle (12, 13) disposées aux deux extrémités de ce corps de soufflet (11), de façon telle que cette colonne d'amortissement (20) fait l'objet d'une variation matérielle sous l'effet d'une compression et d'un déploiement du corps de soufflet (11), caractérisé en ce que la colonne d'amortissement (20) est en une matière du type gélifié présentant une valeur de pénétration d'approximativement 50 à 200, conformément à la norme Japanese Industrial Standard K2530-1976 telle que définie auparavant.

2. Amortisseur du type à soufflet, comprenant un corps de soufflet principal (11) dont les deux ouvertures extrêmes sont fermées de façon étanche par des pièces formant couvercle (12, 13), et une colonne d'amortissement (20) disposée à l'intérieur du corps de soufflet principal (11), en étant alignée suivant l'axe de ce corps de soufflet principal (11) et accouplée à ce corps de soufflet principal (11) par l'intermédiaire des pièces formant couvercle (12, 13) disposées aux deux extrémités de ce corps de soufflet principal (11), de façon telle que cette colonne d'amortissement (20) fait l'objet d'une variation matérielle sous l'effet d'une compression et d'un déploiement du corps de soufflet principal (11), caractérisé en ce que la colonne d'amortissement (20) est en une matière du type gélifié présentant une valeur de pénétration d'approximativement 50 à 200, et en ce qu'il est prévu un soufflet secondaire (30) fermé d'une façon étanche et un trou (14) raccordé à une pièce tubulaire (32) qui assure la communication entre les chambres intérieures (15, 31) du corps de soufflet principal (11) et du soufflet secondaire (30) fermé de façon étanche, la constante élastique de ce soufflet secondaire (30) fermé de façon étanche étant différente de celle du soufflet principal (11).

3. Amortisseur du type à soufflet suivant la revendication 2, dans lequel le corps de soufflet principal (11) et le soufflet secondaire (30) fermé de façon étanche sont remplis d'un fluide.

4. Amortisseur du type à soufflet suivant la revendication 3, dans lequel le fluide est de l'air.

5. Amortisseur du type à soufflet suivant la revendication 3, dans lequel le fluide est de l'huile de silicone.

6. Amortisseur du type à soufflet suivant l'une quelconque des revendications 2 à 5, dans lequel une colonne d'amortissement en matière du type gélifié est prévue à l'intérieur du soufflet secondaire (30) fermé de façon étanche.

7. Amortisseur du type à soufflet suivant l'une quelconque des revendications précédentes, dans lequel la matière du type gélifié contient de fines particules creuses.

8. Amortisseur du type à soufflet suivant l'une quelconque des revendications précédentes, dans lequel le trou (14) comprend une soupape de régulation de débit (141).

9. Amortisseur du type à soufflet suivant l'une quelconque des revendications précédentes, dans lequel la surface extérieure de la ou chaque colonne d'amortissement est couverte d'une matière élastique.

10. Amortisseur du type à soufflet suivant l'une quelconque des revendications précédentes, dans lequel la ou chaque colonne d'amortissement est en silicone.

11. Amortisseur du type à soufflet suivant l'une quelconque des revendications précédentes, dans lequel le trou (14) est prévu sur l'une des pièces formant couvercle.

# FIG. 1

# FIG. 2

# FIG. 3

# FIG. 4

# FIG. 5